# EUROPEAN PATENT SPECIFICATION

(11) **EP 2 990 225 B1**
(45) Date of publication and mention of the grant of the patent: **27.03.2019**
(21) Application number: 15181373.0
(22) Date of filing: 18.08.2015
(51) Int. Cl.: B60C 11/00

(54) **PNEUMATIC TIRE**
LUFTREIFEN
PNEUMATIQUE

(30) Priority: 19.08.2014 JP 2014166518
(43) Date of publication of application: 02.03.2016
(73) Proprietor: Sumitomo Rubber Industries, Ltd., Kobe-shi, Hyogo 651-0072 (JP)
(72) Inventor: UEDA, Kenji, Kobe-shi,, Hyogo 651-0072 (JP)
(74) Representative: TBK

(56) References cited:
- EP-A1- 0 850 788
- EP-A1- 1 666 277
- EP-A2- 0 477 542
- EP-A2- 1 086 832
- US-A1- 2009 008 011

## Description

### Field of the Invention

The present invention relates to a pneumatic tire.

### Background Art

In response to high-performance vehicles in recent years, enhanced durability of tires is required while running at high speed. When tires are running at high speed, the portions more likely to be damaged are tire shoulders and sidewalls. Examples of typical damage in tire shoulders are chunking that occurs when pieces are torn off from the tread surface, and breaker edge loose (BEL) that occurs when belt cords at the edge are detached from their surrounding rubber. Such damage tends to occur especially when the flatness ratio of a tire is 55% or lower. Examples of typical damage in a tire sidewall are the loosened clinch and carcass. Such damage tends to occur especially when the flatness ratio of a tire is 60% or greater. Suppressing the aforementioned types of damage is important to enhance high-speed durability.

To improve running stability at the time of turning, most vehicles employ negative camber. Tires with a camber angle tend to have lower high-speed durability, because the load on the shoulders and sidewalls increases compared with the load on tires without camber angles.

To enhance high-speed durability, change in the structure of tire shoulders or in the material for the components of the shoulders has been proposed. In the tire described in JP2013-107518A, BEL is suppressed from occurring by double winding a ribbon for forming a band at the edge of the belt. In the tire described in JP2013-116644A, BEL is suppressed from occurring by employing cords having a smaller degree of elongation as the material for a band. In addition, methods are also proposed for increasing the width of an edge band, increasing the number of edge bands, increasing the width of a belt, and so forth. The rigidity of tire shoulders is enhanced by employing such a method.

Patent Publication 3 relates to edges of the tread which are defined by its width (TW). Each runs into the region of a fourth shoulder radius, where transition is made to the sidewalls. The radius TRA is given by 0.05 TR1 <= TR2 <= 0.65 TR1. TR2 is either smaller or greater than TRA. When TR2 is less than TRA, TR2 is given by 0.05 TR1 <= TR2 <= 0.6 TR1. When greater, TR2 is given by 0.1 TR1 <= TR2 <= 0.95 TR1. Preferred features: The radius TRA is given by 0.15 <= TRA <= 0.65 TR1. For the case that TR2 exceeds TRA, TR2 is given by 0.6 TR1 <= TR2 <= 0.95 TR1. TR1 is determined from 3 TW <= TR1 <= 25 TW, especially from 3 TW <= TR1 <= 6 TW. The region including the tire crown, with radius TR1, is determined by spacing TW1 between two locations running symmetrically about the tire crown. The size of TW1 is given by 0.1 TW <= TW1 <= 0.7 TW.; Each region of radius TR2 reaches out to two locations in the outer contour, running symmetrically about the crown. Their spacing TW2 is given by 0.15 TW <= TW2 <= 0.9 TW. Transitions to the shoulder radii are each effected at spacing RA from tread edges, which amounts to 1.5 -14%, especially 3 -10% of the tread width TW.
Patent Publications 4, 5 and 6 relate to similar tire structures.

### PRIOR ART PUBLICATION

### PATENT PUBLICATION

Patent Publication 1: JP 2013-107518 A
Patent Publication 2: JP 2013-116644 A
Patent Publication 3: EP 1 086 832 A2
Patent Publication 4: EP 0 850 788 A1
Patent Publication 5: US 2009/008011 A1
Patent Publication 6: EP 1 666 277 A1

### SUMMARY OF THE INVENTION

### PROBLEMS TO BE SOLVED BY THE INVENTION

As described above, conventional methods for enhancing high-speed durability increase the rigidity of tire shoulders. Accordingly, the contact area at tire shoulders is reduced, and contact pressure at the shoulders is thereby increased. As a result, tread wear at the shoulders is accelerated. Such wear is further accelerated in a tire with a camber angle.

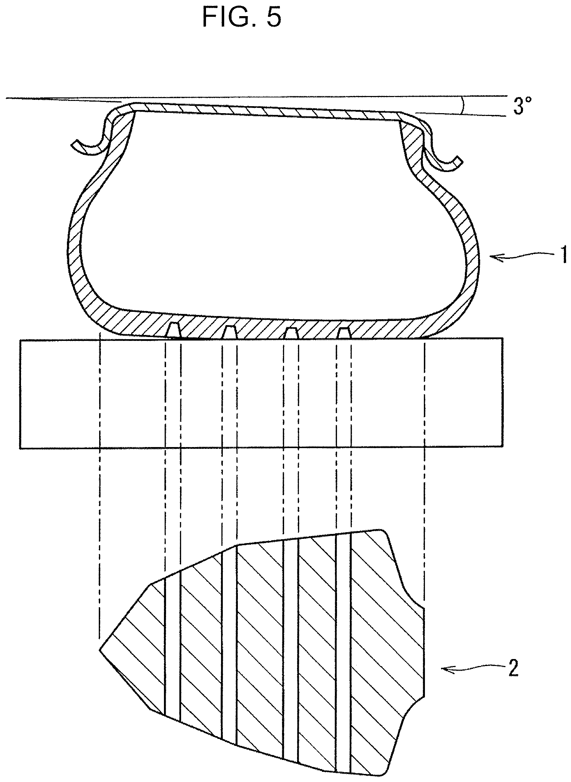

Fig. 5 is a schematic view of a conventional tire 1 when it is in contact with the ground, and of contact-patch pattern 2 of tire 1. The camber angle is set at 3 degrees. As shown in Fig. 5, circumferential lengths (contact-patch lengths) of contact-patch pattern 2 are significantly shorter near the border between a shoulder and a sidewall. Such a significant difference in the contact-patch lengths and the aforementioned accelerated wear at the shoulders cause uneven wear at the shoulders. Uneven wear at the shoulders shortens the lifespan of the tire.

The objective of the present invention is to provide a tire having excellent high-speed durability and wear resistance even when a camber angle is applied on the tire.

### SOLUTIONS TO THE PROBLEMS

The above-mentioned object is solved by a pneumatic tire according to claim 1 or 3. Further advantageous developments are subject-matters of the dependent claims.

A tire according to an aspect of the present invention has a tread with an outer surface to form the tread surface and a belt positioned on the radially inner side of the tread. In a cross section perpendicular to a circumferential direction, a profile of the tread surface ranging from the equatorial plane to the tread edge is formed with multiple arcs protruding in a radially outward direction. Among those arcs, when the i-th arc counted from the equatorial plane in an axially outward direction is set as arc (Ci), and when the radius of arc (Ci) is set as (Ri), the tangent line of arc (C1) on the equatorial plane extends in an exact axial direction. Arc C(i+1) and arc (Ci) make contact at the point where they intersect. Radius R(i+1) is not greater than radius (Ri). In a cross section perpendicular relative to a circumferential direction, when a virtual line inclining at an angle (θ) relative to the axial direction is set as (Lt), when the point where virtual line (Lt) makes contact with the tread surface profile is set as (Pt), and when the axial width from the equatorial plane to contact point (Pt) is set as (Wt), then the ratio of width (Wt) at an inclination angle (θ) between 3 and 5 degrees to width (W) ranging from the equatorial plane to the tread edge is less than 65%.

When an inclination angle (θ) is 5 degrees, the ratio of width (Wt) to width (W) is preferred to be less than 65%.

The number of arcs is preferred to be three or greater.

The number of arcs is preferred to be exactly four, and the ratio of radius (R2) to radius (R1) is preferred to be 35% or greater but 65% or less. When the axial width from the equatorial plane to the intersection of arcs (C1, C2) is set as (W12), the ratio of width (W12) to width (W) is preferred to be 26% or greater but 38% or less.

According to claim 1, when the number of arcs is exactly four, the ratio of radius (R3) to radius (R1) is preferred to be 10% or greater but 25% or less, and the ratio of radius (R4) to radius (R1) is preferred to be 2.8% or greater but 8.0% or less. When the axial width from the equatorial plane to the intersection of arcs (C2, C3) is set as (W23), and when the axial width from the equatorial plane to the intersection of arcs (C3, C4) is set as (W34), then the ratio of width (W23) to width (W) is preferred to be 50% or greater but 62% or less, and the ratio of width (W34) to width (W) is preferred to be 80% or greater but 98% or less.

According to claim 3, when the number of arcs is exactly three, when the ratio of radius (R2) to radius (R1) is 28% or greater but 43% or less, and when the axial width from the equatorial plane to the intersection of arcs (C1, C2) is set as (W12), then the ratio of width (W12) to width (W) may be 28% or greater but 44% or less.

When the number of arcs is exactly three, the ratio of radius (R3) to radius (R1) is preferred to be 2.5% or greater but 8.0% or less. When the axial width from the equatorial plane to the intersection of arcs (C2, C3) is set as (W23), the ratio of width (W23) to width (W) is preferred to be 80% or greater but 98% or less.

When the axial width from the equatorial plane to the outer edge of the belt is set as (Wb), the ratio of width (Wb) to width (W) is preferred to be 90% or greater but 98% or less.

### EFFECTS OF THE INVENTION

In a tire related to the present invention, when a virtual line inclining at an angle (θ) relative to an axial direction is set as (Lt), when the point where virtual line (Lt) makes contact with the tread surface profile is set as (Pt), and when the axial width from the equatorial plane to contact point (Pt) is set as (Wt), then width (Wt) at an inclination angle (θ) of 3 degrees and axial width (W) ranging from the equatorial plane to the tread edge are set to have a ratio (Wt/W) of 65% or less. By so setting, the position having the longest contact-patch length comes closer to the equatorial plane than that of a conventional tire. Accordingly, the load on tire shoulders is reduced, while the load on sidewalls is also reduced. In addition, such a setting contributes to preventing damage to the shoulders and sidewalls. Even when a camber angle is applied on the tire, damage to the tire is prevented.

In the aforementioned tire, the load on the shoulders and sidewalls is reduced. Thus, the structure of tire shoulders or the material for the components of the shoulders does not need to be changed to suppress damage to the tire. Also, the rigidity of the shoulders is suppressed, and contact pressure is thereby decreased at the shoulders. The wear in the shoulders is suppressed. Moreover, since the position having the longest contact-patch length comes closer to the equatorial plane and the rigidity of the shoulders is suppressed, a significant difference in the contact-patch lengths is suppressed near the border of a shoulder and a sidewall. As a result, uneven wear is prevented in such a tire.

### BRIEF DESCRIPTION OF THE DRAWINGS

Fig. 1 is a cross-sectional view showing part of a tire according to an embodiment of the present invention;
Fig. 2 is a view showing the tread surface profile of the tire shown in Fig. 1;
Fig. 3 is a view schematically showing a state when the tire in Fig. 1 makes contact with the ground;
Fig. 4 is a view showing the tread surface profile of a tire according to another embodiment of the present invention; and
Fig. 5 is a view schematically showing a state when a conventional tire makes contact with the ground.

### DETAILED DESCRIPTION OF THE EMBODIMENTS

In the following, preferred embodiments of the present invention are described in detail by referring to the accompanying drawings when applicable. In the present application, "ratios" are all expressed in "percentages (%)."

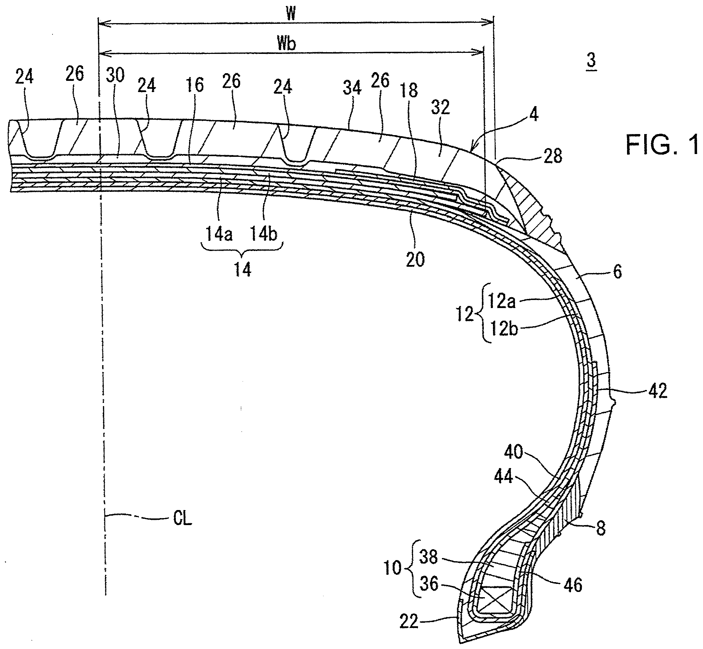

Fig. 1 shows pneumatic tire 3. In Fig. 1, vertical directions are radial directions of tire 3, horizontal directions to the left and right are axial directions of tire 3, and directions perpendicular to the drawing sheet are circumferential directions of tire 3. In Fig. 1, dashed line (CL) indicates the equatorial plane of tire 3. The shape of tire 3 is symmetrical at equatorial plane (CL) except for the tread pattern.

Tire 3 includes tread 4, sidewall 6, clinch 8, bead 10, carcass 12, belt 14, band 16, edge band 18, inner liner 20 and chafer 22. Tire 3 is a tubeless tire. Tire 3 is for mounting on a passenger car.

Tread 4 is shaped to protrude in a radially outward direction. Tread 4 forms tread surface 34 to make contact with the ground. As shown in the accompanying drawings, tread 4 has main grooves 24 extending in a tire circumferential direction. Main grooves 24 contribute to the drainage of tire 3. Tread 4 is further provided with multiple sub grooves (not shown). The tread pattern is formed with main grooves 24 and sub grooves. The number of main grooves 24 of tire 3 shown in Fig. 1 is four, including a main groove 24 that is not shown in the drawing. However, the number of main grooves 24 is not limited to four. Tread 4 may have three or fewer main grooves 24; or tread 4 may have five or more main grooves 24. Alternatively, it is an option for tread 4 not to have any main groove 24 or not to have any sub grooves.

The region sandwiched by adjacent main grooves 24 and the region ranging from the radially outermost main groove 24 to tread edge 28 are each referred to as rib 26. The number of ribs 26 in tire 3 in Fig. 1 is five. When tire 3 has no main groove 24, the region between two tread edges 28 is rib 26. In such a structure, the number of ribs 26 is one.

Tread 4 has base layer 30 and cap layer 32. Cap layer 32 is positioned on the radially outer side of base layer 30. Cap layer 32 is laminated on base layer 30. Base layer 30 is made of a crosslinked rubber having excellent adhesiveness properties. A typical base material for base layer 30 is natural rubber. Cap layer 32 is made of a crosslinked rubber that exhibits excellent wear resistance, heat resistance and grip performance.

Each sidewall 6 extends from the edge of tread 4 in a radially approximate inward direction. The radially outer edge of sidewall 6 is bonded to tread 4. Sidewall 6 is made of a crosslinked rubber that exhibits excellent cut resistance and weatherability. Sidewall 6 prevents damage to carcass 12.

Clinch 8 is positioned on the radially approximate inner side of sidewall 6. Clinch 8 is positioned on the axially outer side of bead 10 and carcass 12. Clinch 8 is made of a crosslinked rubber with excellent wear resistance. Clinch 8 abuts the flange of a rim.

Bead 10 is positioned on the axially inner side of clinch 8. Each bead 10 has core 36 and apex 38, which extends from core 36 in a radially outward direction. Core 36 is shaped like a ring in a circumferential direction of tire 3. Core 36 includes a wound non-stretchable wire. A typical material for the wire is steel. Apex 38 tapers in a radially outward direction. Apex 38 is made of a crosslinked hard rubber.

Carcass 12 is made of first ply (12a) and second ply (12b). First and second plies (12a, 12b) are bridged between beads 10 on each side and are formed to extend along tread 4 and sidewalls 6. First ply (12a) is turned up around core 36 from the axially inner side toward the outer side. Because of the turn-up structure, main portion 40 and turn-up portion 42 are formed in first ply (12a). Second ply (12b) is turned up around core 36 from the axially inner side toward the outer side. Because of the turn-up structure, main portion 44 and turn-up portion 46 are formed in second ply (12b).

Although not shown in the drawing, first and second plies (12a, 12b) are each made up of a topping rubber and numerous cords arranged parallel to each other. The absolute value of the angle of each cord relative to equatorial plane (CL) is 75 to 90 degrees. In other words, carcass 12 is structured to be radial. The cords are made of organic fibers. Preferred examples of organic fibers are polyester, nylon, rayon, polyethylene naphthalate, and aramid fibers. Carcass 12 may also be made one-ply.

Belt 14 is positioned on the radially inner side of tread 4. Belt 14 is laminated on carcass 12. Belt 14 reinforces carcass 12. Belt 14 is made of first layer (14a) and second layer (14b). Although not shown in the drawing, first and second layers (14a, 14b) are each made up of a topping rubber and numerous cords arranged parallel to each other. Each cord inclines relative to equatorial plane (CL). Generally, the absolute value of each inclination angle is 10 degrees or greater but 35 degrees or less. The inclination direction of the cords relative to equatorial plane (CL) in first layer (14a) is opposite that in second layer (14b). A preferred example of the material for the cords is steel. However, organic fibers may also be used for the cords.

Edge band 18 is positioned on the radially outer side of band 16 and near the edge of belt 14. Although not shown in the drawing, each edge band 18 is made of cords and a topping rubber. The cords are helically wound. Edge band 18 has a so-called jointless structure. The cords extend substantially in a circumferential direction. The angle of cords relative to the circumferential direction is 5 degrees or less, preferably 2 degrees or less. Since the cords bind the edge of belt 14, belt 14 is suppressed from lifting. The cords are made of organic fibers. Preferred examples of organic fibers are nylon, polyester, rayon, polyethylene naphthalate, and aramid fibers.

Inner liner 20 is positioned on the inner side of carcass 12. Inner liner 20 is bonded to the inner surface of carcass 12. Inner liner 20 is made of a crosslinked rubber. A rubber with excellent air impermeability properties is used for inner liner 20. Typical examples of the base material for inner liner 20 are butyl rubbers and halogenated butyl rubbers. Inner liner 20 retains the inner pressure of tire 3.

Chafer 22 is positioned near bead 10. When tire 3 is mounted on a rim, each chafer 22 abuts the rim. The vicinity of bead 10 is protected by such a structure. Chafer 22 is made of cloth and rubber impregnated in the cloth. Chafer 22 may also be integrated with clinch 8.

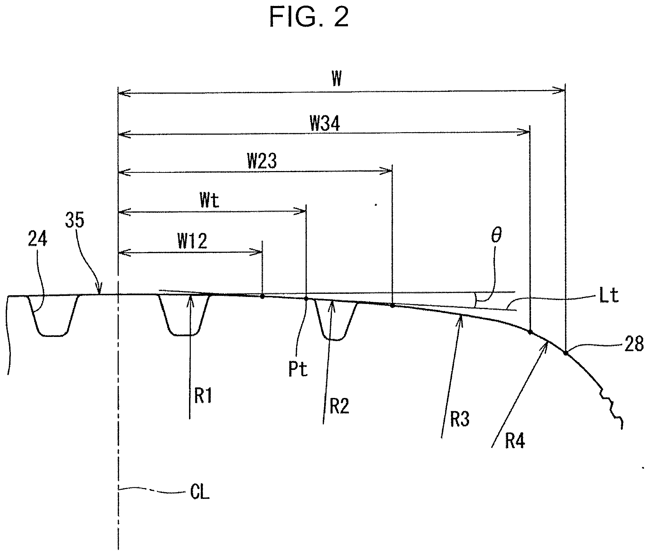

Fig. 2 shows profile 35 of tread surface 34 as well as main grooves 24 of tire 3 in Fig. 1. Profile 35 of tread surface 34 indicates the outline of a virtual tread surface obtained by assuming there are no grooves formed on tread 4. In the present embodiment, measurements and angles of profile 35 are based on the cavity surface of a tire mold. In Fig. 2, vertical directions are radial directions of tire 3, horizontal directions to the left and right are axial directions of tire 3, and directions perpendicular to the drawing sheet are circumferential directions of tire 3. In addition, the dashed line (CL) in Fig. 2 indicates the equatorial plane of tire 3.

Profile 35 of tread surface 34 from equatorial plane (CL) to tread edge 28 is formed with multiple arcs. Here, "i" is a natural number, and the i-th arc counted from equatorial plane (CL) toward tread edge 28 is referred to as arc (Ci), and the radius of arc (Ci) as (Ri). The center of arc (C1) is positioned on equatorial plane (CL). The tangent line of arc (C1) on equatorial plane (CL) extends in an exact axial direction. Two arcs (Ci) and C(i+1) adjacent to each other make contact at the point where they intersect. Radius R(i+1) is not greater than radius (Ri). In tire 3 shown in Fig. 2, four arcs are formed in profile 35, which ranges from equatorial plane (CL) to tread edge 28. In the present application, the number of arcs that form profile 35 of tread surface 34 ranging from equatorial plane (CL) to tread edge 28 is referred to as "the number of arcs in profile 35."

Double-headed arrow (W) in Fig. 2 indicates the axial width between equatorial plane (CL) and tread edge 28. Straight line (Lt) indicates a virtual line with an inclination angle (θ) relative to an axial direction. Virtual line (Lt) inclines in a radially inward direction from the axially inner side to the outer side. Contact point (Pt) is where virtual line (Lt) makes contact with profile 35 of tread surface 34. Double-headed arrow (Wt) is the axial width between equatorial plane (CL) and contact point (Pt). Width (Wt) varies according to inclination angle (θ). In the same profile, the greater the inclination angle (θ), the greater is the width (Wt). When inclination angle (θ) is 3 degrees, width (Wt) and width (W) in tire 3 are set to have a ratio (Wt/W) of less than 65%.

To determine profile 35 of tread surface 34 in tire 3, the contact-patch width of tire 3 is determined first. The contact-patch width is determined based on the grip performance, wear resistance, running stability and the like of tire 3.

Once the contact-patch width is determined, the width, number and interval of main grooves 24 are determined for tire 3. In other words, the number, position and width of ribs 26 are determined. Such a structure is determined from the viewpoint of the drainage properties of the tire.

Next, the number of arcs in profile 35 and positions of their contact points are determined. At that time, the contact point of adjacent arcs is arranged on rib 26. No contact point is arranged in main groove 24. The curvatures of arcs in profile 35 are different on each side of the contact point of two arcs. Therefore, if the contact point is arranged in main groove 24, warping tends to occur in tread 4.

Lastly, the curvature radius of each arc is determined. The curvature radius of each arc is determined so that the ratio (Wt/W) will be 65% or less.

In the following, the effects of the present invention are described.

Conventionally, the structure and the material for components of tire shoulders have been changed in an attempt to enhance high-speed durability. Such change increases the rigidity of the shoulders. Thus, the size of the contact patch decreases at the shoulders, and the contact pressure at the shoulders increases accordingly. As a result, tread wear on the shoulders is accelerated. Such wear is further accelerated when a camber angle is applied on the tire. The contact-patch length is significantly shortened near the border of a shoulder and a sidewall of the tire with a camber angle. Such a change in the contact-patch length and accelerated wear in the shoulders cause uneven wear in the shoulders. Uneven wear in the shoulder area may reduce the lifespan of the tire.

To suppress wear in the shoulders, it is an option to change the composition of the rubber in the shoulders so as to improve wear resistance. Moreover, the thickness of shoulders may be changed in an attempt to prevent the wear from shortening the tire lifespan. However, those methods increase the heat generated in the tread. Also, those methods cause the rolling resistance to increase.

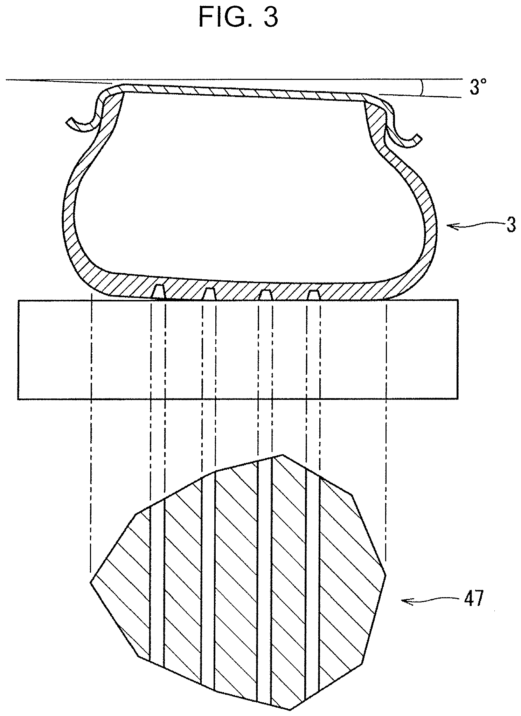

In tire 3 of the present embodiment, when the virtual line with an inclination angle (θ) relative to an axial direction is set as (Lt), when the point where virtual line (Lt) makes contact with profile 35 of tread surface 34 is set as (Pt), and when the axial width from equatorial plane (CL) to contact point (Pt) is set as (Wt), then width (Wt) at an inclination angle (θ) of 3 degrees and width (W) ranging from equatorial plane (CL) to tread edge 28 are set to have a ratio (Wt/W) of 65% or less. Fig. 3 is a view schematically showing tire 3 in contact with the ground and contact-patch pattern 47 of tire 3. The camber angle is set at 3 degrees. Tire 3 is filled with air at a normal inflation pressure. A normal load is exerted on tire 3. As is clear when Figs. 3 and 5 are compared, the position having the longest contact-patch length of tire 3 comes closer to tire equatorial plane (CL) than that of a conventional tire. In other words, the position having the maximum load exerted on tread surface 34 is moved toward equatorial plane (CL) having a longer circumferential length. Such a structure reduces the load on tire shoulders and lowers the amount of heat generated in the shoulders. Accordingly, damage to the shoulders of tire 3 is prevented.

Furthermore, the above structure alleviates the load on sidewalls, and lowers the degree of distortion in the sidewalls. Especially, the degree of distortion near bead 10 is reduced. Based on the finite-element analysis, distortion in a compression direction that may cause looseness on the interface between clinch 8 and carcass 12 is alleviated by about 40%. When distortion is alleviated, damage to sidewalls is prevented. In addition, the reduced load on sidewalls contributes to suppressing standing waves, and damage to tire 3 caused by standing waves is prevented. Even when a camber angle is applied on tire 3, damage to tire 3 is suppressed.

As described above, load on the shoulders and sidewalls is alleviated in tire 3. Thus, to suppress damage to the tire, there is no need to change the structure of the shoulders or the material for components of the shoulders. Accordingly, the rigidity of the shoulders is suppressed from increasing. The contact pressure at the shoulders is lowered, thereby suppressing wear in the shoulders of tire 3.

Moreover, since the position having the longest contact-patch length is closer to the equatorial plane and the rigidity of the shoulders is suppressed from increasing, the contact-patch length of tire 3 is gradually shortened from a shoulder toward a sidewall as shown in Fig. 3. Thus, compared with a conventional tire, the contact-patch length is suppressed from making a significant change near the border of a shoulder and a sidewall of tire 3. Uneven wear is prevented in tire 3.

In the above, the effects of the present invention have been described when a camber angle is applied on tire 3. Compared with a conventional tire, uneven wear is also prevented in tire 3 without a camber angle. Namely, since the position having the longest contact-patch length is closer to the equatorial plane and the rigidity of the shoulders is suppressed from increasing, differences in the contact-patch lengths in the border of adjacent ribs 26 are made smaller than those in a conventional tire. In the contact-patch pattern of tire 3, there is no significant difference in the border of adjacent ribs 26. The outline of the contact-patch pattern makes a smooth continuous line. Accordingly, the difference in the degree of slippage in ribs 26 decreases. The difference between the degrees of wear in ribs 26 is reduced, thereby preventing uneven wear caused by different degrees of wear between ribs.

When the inclination angle (θ) is 3 degrees, width (Wt) and width (W) are more preferred to have a ratio (Wt/W) of 60% or less. When the ratio (Wt/W) at an inclination angle (θ) of 3 degrees is set at 60% or less, the load on the shoulders and sidewalls is reduced more effectively. Damage to the shoulders and sidewalls of tire 3 is prevented even more effectively.

When the inclination angle (θ) is 3 degrees, width (Wt) and width (W) are more preferred to have a ratio (Wt/W) of 30% or greater. By setting a ratio (Wt/W) at 30% or greater, profile 35 near equatorial plane (CL) of tread surface 34 is maintained properly. Tire 3 exhibits excellent wear resistance. Sufficient grip performance is achieved in tire 3.

When the inclination angle (θ) is 5 degrees, width (Wt) and width (W) are more preferred to have a ratio (Wt/W) of 65% or less. When the ratio (Wt/W) at an inclination angle (θ) of 5 degrees is set at 65% or less, the load on the shoulders and sidewalls is reduced more effectively. Damage to the shoulders and sidewalls of tire 3 is prevented even more effectively.

The number of arcs in profile 35 is preferred to be three or greater. By setting the number of arcs to be three or greater, profile 35 of tread surface 34 is properly formed.

The number of arcs in profile 35 is preferred to be five or less. The curvature of an arc in profile 35 is different on each side of the contact point of the arcs. By setting the number of arcs to be five or less, warping in tread 4 caused by a greater number of contact points is prevented.

As described above, the number of ribs 26 is five in tire 3 shown in Fig. 2. A typical number of ribs is five in a tire with a tire width of 215 or greater. Here, tire width indicates a "nominal section width" specified as the "nominal width of a tire" in JATMA regulations. As shown in Fig. 2, the number of arcs in profile 35 of tire 3 is preferred to be four. By setting the number of arcs to be four, tire 3 with a tire width of 215 or greater can form profile 35 capable of achieving both excellent wear resistance and durability.

In tire 3 where profile 35 is formed with four arcs, radius (R2) of arc (C2) and radius (R1) of arc (C1) are preferred to have a ratio (R2/R1) of 65% or less. By setting the ratio (R2/R1) at 65% or less, tread surface 34 is formed to have a properly rounded shape. The load on the shoulders and sidewalls of tire 3 is alleviated. Damage to the shoulders and sidewalls of tire 3 is effectively prevented. From those viewpoints, the ratio (R2/R1) is more preferred to be 60% or less.

The ratio (R2/R1) is preferred to be 35% or greater. By setting the ratio (R2/R1) at 35% or greater, a sufficient contact-patch width is secured. A rounded tread surface 34 of tire 3 does not result in an overly narrow contact-patch width. Such a structure contributes to excellent wear resistance in tire 3. Moreover, tire 3 exhibits sufficient grip performance. From those viewpoints, the ratio (R2/R1) is more preferred to be 40% or greater.

Radius (R1) is preferred to be 1300 mm or less. When radius (R1) is set at 1300 mm or less, tread surface 34 is formed to have a properly rounded shape. The load on the shoulders and sidewalls of tire 3 is alleviated. Damage to the shoulders and sidewalls of tire 3 is effectively prevented.

Radius (R1) is preferred to be 500 mm or greater. When radius (R1) is set at 500 mm or greater, a sufficient contact-patch width is secured. A rounded tread surface 34 of tire 3 does not result in an overly narrow contact-patch width. Such a structure contributes to excellent wear resistance in tire 3. In addition, tire 3 exhibits sufficient grip performance.

Double-headed arrow (W12) in Fig. 2 indicates the axial width from equatorial plane (CL) to the intersection of arcs (C1, C2). Width (W12) and width (W) are preferred to have a ratio (W12/W) of 38% or less. By setting the ratio (W12/W) at 38% or less, tread surface 34 is formed to have a properly rounded shape. The load on the shoulders and sidewalls of tire 3 is alleviated. Damage to the shoulders and sidewalls of tire 3 is effectively prevented. From those viewpoints, the ratio (W12/W) is more preferred to be 35% or less.

The ratio (W12/W) is preferred to be 26% or greater. By setting the ratio (W12/W) at 26% or greater, a sufficient contact-patch width is secured. A rounded tread surface 34 of tire 3 does not result in an overly narrow contact-patch width. Such a structure contributes to achieving excellent wear resistance in tire 3. In addition, tire 3 exhibits sufficient grip performance. From those viewpoints, the ratio (W12/W) is more preferred to be 28% or greater.

Radius (R3) of arc (C3) and radius (R1) of arc (C1) are preferred to have a ratio (R3/R1) of 25% or less. By setting the ratio (R3/R1) at 25% or less, tread surface 34 is formed to have a properly rounded shape. The load on the shoulders and sidewalls of tire 3 is alleviated. Damage to the shoulders and sidewalls of tire 3 is effectively prevented. From those viewpoints, the ratio (R3/R1) is more preferred to be 22% or less.

The ratio (R3/R1) is preferred to be 10% or greater. By setting the ratio (R3/R1) at 10% or greater, a sufficient contact-patch width is secured. A rounded tread surface 34 of tire 3 does not result in an overly narrow contact-patch width. Such a structure contributes to excellent wear resistance in tire 3. In addition, tire 3 exhibits sufficient grip performance. From those viewpoints, the ratio (R3/R1) is more preferred to be 12% or greater.

Radius (R3) is preferred to be 200 mm or less. When radius (R3) is set at 200 mm or less, tread surface 34 is formed to have a properly rounded shape. The load on the shoulders and sidewalls of tire 3 is alleviated. Damage to the shoulders and sidewalls of tire 3 is effectively prevented. From those viewpoints, radius (R3) is more preferred to be 180 mm or less.

Radius (R3) is preferred to be 90 mm or greater. When radius (R3) is set at 90 mm or greater, a sufficient contact-patch width is secured. A rounded tread surface 34 of tire 3 does not result in an overly narrow contact-patch width. Such a structure contributes to excellent wear resistance in tire 3. In addition, tire 3 exhibits sufficient grip performance. From those viewpoints, radius (R3) is more preferred to be 100 mm or greater.

Double-headed arrow (W23) in Fig. 2 indicates the axial width from equatorial plane (CL) to the intersection of arcs (C2, C3). Width (W23) and width (W) are preferred to have a ratio (W23/W) of 62% or less. By setting the ratio (W23/W) at 62% or less, tread surface 34 is formed to have a properly rounded shape. The load on the shoulders and sidewalls of tire 3 is alleviated. Damage to the shoulders and sidewalls of tire 3 is effectively prevented. From those viewpoints, the ratio (W23/W) is more preferred to be 60% or less.

The ratio (W23/W) is preferred to be 50% or greater. By setting the ratio (W23/W) at 50% or greater, a sufficient contact-patch width is secured. A rounded tread surface 34 of tire 3 does not result in an overly narrow contact-patch width. Such a structure contributes to excellent wear resistance in tire 3. In addition, tire 3 exhibits sufficient grip performance. From those viewpoints, the ratio (W23/W) is more preferred to be 52% or greater.

Radius (R4) of arc (C4) and radius (R1) of arc (C1) are preferred to have a ratio (R4/R1) of 8.0% or less. By setting the ratio (R4/R1) at 8.0% or less, tread surface 34 is formed to have a properly rounded shape. The load on the shoulders and sidewalls of tire 3 is alleviated. Damage to the shoulders and sidewalls of tire 3 is effectively prevented. From those viewpoints, the ratio (R4/R1) is more preferred to be 5.0% or less.

The ratio (R4/R1) is preferred to be 2.8% or greater. By setting the ratio (R4/R1) at 2.8% or greater, a sufficient contact-patch width is secured. A rounded tread surface 34 of tire 3 does not result in an overly narrow contact-patch width. Such a structure contributes to excellent wear resistance in tire 3. In addition, tire 3 exhibits sufficient grip performance. From those viewpoints, the ratio (R4/R1) is more preferred to be 3.0% or greater.

Radius (R4) is preferred to be 45 mm or less. When radius (R4) is set at 45 mm or less, tread surface 34 is formed to have a properly rounded shape. The load on the shoulders and sidewalls of tire 3 is alleviated. Damage to the shoulders and sidewalls of tire 3 is effectively prevented. From those viewpoints, radius (R4) is more preferred to be 40 mm or less.

Radius (R4) is preferred to be 25 mm or greater. When radius (R4) is set at 25 mm or greater, a sufficient contact-patch width is secured. A rounded tread surface 34 of tire 3 does not result in an overly narrow contact-patch width. Such a structure contributes to excellent wear resistance in tire 3. In addition, tire 3 exhibits sufficient grip performance. From those viewpoints, radius (R4) is more preferred to be 27 mm or greater.

Double-headed arrow (W34) in Fig. 2 indicates the axial width from equatorial plane (CL) to the intersection of arcs (C3, C4). Width (W34) and width (W) are preferred to have a ratio (W34/W) of 98% or less. By setting the ratio (W34/W) at 98% or less, tread surface 34 is formed to have a properly rounded shape. The load on the shoulders and sidewalls of tire 3 is alleviated. Damage to the shoulders and sidewalls of tire 3 is effectively prevented. From those viewpoints, the ratio (W34/W) is more preferred to be 92% or less.

The ratio (W34/W) is preferred to be 80% or greater. By setting the ratio (W34/W) at 80% or greater, a sufficient contact-patch width is secured. A rounded tread surface 34 of tire 3 does not result in an overly narrow contact-patch width. Such a structure contributes to excellent wear resistance in tire 3. In addition, tire 3 exhibits sufficient grip performance. From those viewpoints, the ratio (W34/W) is more preferred to be 82% or greater.

Double-headed arrow (W) in Fig. 1 indicates the axial width from equatorial plane (CL) to tread edge 28, and is the same as width (W) in Fig. 2. Double-headed arrow (Wb) is the axial width from equatorial plane (CL) to the edge of belt 14. Width (Wb) and width (W) are preferred to have a ratio (Wb/W) of 98% or less. A ratio (Wb/W) of 98% or less suppresses the shoulders from becoming overly rigid. The contact pressure at the shoulders is properly suppressed in tire 3. Tire 3 exhibits excellent wear resistance. From those viewpoints, the ratio (Wb/W) is more preferred to be 96% or less.

The ratio (Wb/W) is preferred to be 90% or greater. By setting the ratio (Wb/W) at 90% or greater, proper rigidity is maintained in the shoulders. The shoulders of tire 3 exhibit excellent durability. Moreover, excellent steering stability is achieved when tire 3 makes turns.

In the embodiments of the present invention, dimensions and angles in tire 3 and in each member of tire 3 are those measured when tire 3 is mounted on a normal rim and filled with air at a normal inflation pressure unless otherwise specified. No load is exerted on the tire when measured. In the present application, a normal rim indicates a rim specified in the regulations that include standards for tire 3: it is specified as a "Normal Rim" by JATMA, "Design Rim" by TRA, and "Measuring Rim" by ETRTO. A normal inflation pressure in the present application indicates air pressure specified by a regulatory system that includes standards for the tire: it is specified as "Maximum Air Pressure" by JATMA, maximum value listed in the table "Tire Load Limits at Various Cold Inflation Pressures" by TRA, and "Inflation Pressure" by ETRTO. Regarding tire 3 for a passenger car, dimensions and angles are measured at an inflation pressure of 180 kPa. Normal load in the present application indicates the load specified in the regulations that include standards for tire 3: it is specified as "Maximum Load Capacity" by JATMA, maximum value listed in the table "Tire Load Limits at Various Cold Inflation Pressures" by TRA, and "Load Capacity" by ETRTO.

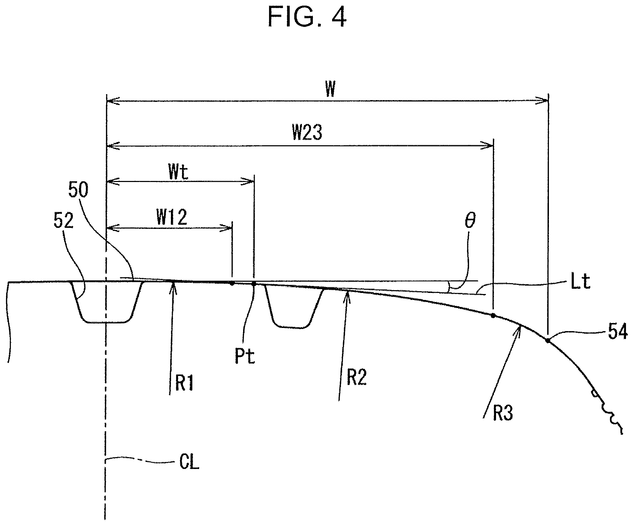

Fig. 4 shows profile 50 of the tread surface along with main grooves 52 of a tire according to another embodiment of the present invention. In Fig. 4, vertical directions are radial directions of the tire, horizontal directions to the left and right are axial directions of the tire, and the directions perpendicular to the drawing sheet are circumferential directions of the tire. In Fig. 4, dashed line (CL) indicates the equatorial plane of the tire. The shape of the tire is symmetrical at equatorial plane (CL) except for the tread pattern.

Although not shown in Fig. 4, the tire includes a tread, sidewall, clinch, bead, carcass, belt, band, edge band, inner liner and chafer. The tire is a tubeless tire. The tire is for mounting on a passenger car. The tire has the same structure as tire 3 in Fig. 1 except for the tread.

The tread protrudes in a radially outward direction. The tread forms the tread surface that makes contact with the ground. As shown in Fig. 4, the tread is provided with main grooves 52 extending in a circumferential direction. Although not shown in Fig. 4, the tread further includes multiple sub grooves. The number of main grooves 52 is three in the tire of Fig. 4. The number of ribs is four.

Profile 50 of the tread surface from equatorial plane (CL) to tread edge 54 is formed with multiple arcs. When "i" is a natural number, the i-th arc counted from the equatorial plane in a direction toward tread edge 54 is set as arc (Ci), and the radius of arc (Ci) as (Ri). The center of arc (C1) is positioned on equatorial plane (CL). The tangent line of arc (C1) on equatorial plane (CL) extends in an exact axial direction. Two arcs (Ci) and C(i+1) adjacent to each other make contact at the point where they intersect. Radius R(i+1) is not greater than radius (Ri). In the tire shown in Fig. 4, the number of arcs in profile 50 is three.

Double-headed arrow (W) in Fig. 4 indicates the axial width between equatorial plane (CL) and tread edge 54. Straight line (Lt) indicates a virtual line with an inclination angle (θ) relative to an axial direction. Virtual line (Lt) inclines in a radially inward direction from the axially inner side to the outer side. Point (Pt) is where virtual line (Lt) makes contact with profile 50 of the tread surface. Double-headed arrow (Wt) is the axial width between equatorial plane (CL) and contact point (Pt). Width (Wt) varies according to inclination angle (θ). In the same profile 50, the greater the inclination angle (θ), the greater is the value of width (Wt). In the tire, when inclination angle (θ) is 3 degrees, width (Wt) and width (W) are set to have a ratio (Wt/W) of less than 65%.

The effects of the present invention are described below.

In a tire related to the present invention, when a virtual line inclining at angle (θ) relative to an axial direction is set as (Lt), when the contact point where virtual line (Lt) makes contact with profile 50 of the tread surface is set as (Pt), and when the axial width from the equatorial plane to contact point (Pt) is set as (Wt), then width (Wt) at an inclination angle (θ) of 3 degrees and axial width (W) ranging from the equatorial plane to tread edge 54 are set to have a ratio (Wt/W) of 65% or less. Compared with a conventional tire, the position having the longest contact-patch length is closer to equatorial plane (CL) in the tire. In other words, the position having the greatest load exerted on the tread surface is moved toward equatorial plane (CL) where the circumferential length is longer. Such a structure alleviates the load on the shoulders, and heat is less likely to be generated in the shoulders. Damage to the shoulders of the tire is prevented.

Moreover, the above structure also alleviates the load on sidewalls. Thus, the degree of distortion in sidewalls is lowered. Especially, the degree of distortion near the bead is reduced. Damage to sidewalls is prevented. In addition, a reduction in the load exerted on sidewalls contributes to suppressing standing waves, and damage to the tire caused by standing waves is prevented. Even when a camber angle is applied on the tire, damage to the tire is prevented.

As described above, a load on the shoulders and sidewalls is alleviated in the tire. Thus, to suppress damage, there is no need to change the structure of tire shoulders or change the material for components of the shoulders. An increase in the rigidity of the shoulders is suppressed, thereby lowering the contact pressure at the shoulders. Wear in the shoulders is suppressed. In addition, the contact-patch length of the tire is gradually shortened from a shoulder to a sidewall. Accordingly, the contact-patch length at the border of a shoulder and a sidewall is suppressed from being changed significantly compared with that in a conventional tire. Uneven wear is prevented in the tire.

As described above, the number of ribs is four in the tire shown in Fig. 4. A typical number of ribs is four in a tire having a tire width of 215 or smaller. As shown in Fig. 4, the number of arcs in profile 50 of the tire is preferred to be three. When the number of arcs is set at three, profile 50 capable of achieving both excellent wear resistance and durability is obtained for the tire having a tire width of 215 or smaller.

In a tire having profile 50 formed with three arcs, radius (R2) of arc (C2) and radius (R1) of arc (C1) are preferred to have a ratio (R2/R1) of 43% or less. By setting the ratio (R2/R1) at 43% or less, the tread surface is formed to have a properly rounded shape. The load on the shoulders and sidewalls of the tire is alleviated. Damage to the shoulders and sidewalls of the tire is effectively prevented. From those viewpoints, the ratio (R2/R1) is more preferred to be 40% or less.

The ratio (R2/R1) is preferred to be 28% or greater. By setting the ratio (R2/R1) at 28% or greater, a sufficient contact-patch width is secured. A rounded tread surface of the tire does not result in an overly narrow contact-patch width. Such a structure contributes to excellent wear resistance in the tire. Moreover, the tire exhibits sufficient grip performance. From those viewpoints, the ratio (R2/R1) is more preferred to be 30% or greater.

Radius (R1) is preferred to be 800 mm or less. When radius (R1) is set at 800 mm or less, the tread surface is formed to have a properly rounded shape. The load on the shoulders and sidewalls of the tire is alleviated. Damage to the shoulders and sidewalls of the tire is effectively prevented. From those viewpoints, the radius (R1) is more preferred to be 700 mm or less.

Radius (R1) is preferred to be 300 mm or greater. When radius (R1) is set at 300 mm or greater, a sufficient contact-patch width is secured. A rounded tread surface of the tire does not result in an overly narrow contact-patch width. Such a structure contributes to excellent wear resistance in the tire. In addition, the tire exhibits sufficient grip performance. From those viewpoints, the radius (R1) is more preferred to be 350 mm or greater.

Radius (R2) is preferred to be 200 mm or less. When radius (R2) is set at 200 mm or less, the tread surface is formed to have a properly rounded shape. The load on the shoulders and sidewalls of the tire is alleviated. Damage to the shoulders and sidewalls of the tire is effectively prevented. From those viewpoints, radius (R2) is more preferred to be 180 mm or less.

Radius (R2) is preferred to be 90 mm or greater. When radius (R2) is set at 90 mm or greater, a sufficient contact-patch width is secured. A rounded tread surface of the tire does not result in an overly narrow contact-patch width. Such a structure contributes to excellent wear resistance in the tire. In addition, the tire exhibits sufficient grip performance. From those viewpoints, radius (R2) is more preferred to be 100 mm or greater.

Double-headed arrow (W12) in Fig. 4 indicates the axial width between equatorial plane (CL) and the intersection of arcs (C1, C2). Double-headed arrow (W) is the axial width from equatorial plane (CL) to tread edge 54. Width (W12) and width (W) are preferred to have a ratio (W12/W) of 44% or less. By setting the ratio (W12/W) at 44% or less, the tread surface is formed to have a properly rounded shape. The load on the shoulders and sidewalls of the tire is alleviated. Damage to the shoulders and sidewalls of the tire is effectively prevented. From those viewpoints, ratio (W12/W) is more preferred to be 40% or less.

The ratio (W12/W) is preferred to be 28% or greater. By setting the ratio (W12/W) at 28% or greater, a sufficient contact-patch width is secured. A rounded tread surface of the tire does not result in an overly narrow contact-patch width. Such a structure contributes to excellent wear resistance in the tire. In addition, the tire exhibits sufficient grip performance. From those viewpoints, the ratio (W12/W) is more preferred to be 30% or greater.

Radius (R3) of arc (C3) and radius (R1) of arc (C1) are preferred to have a ratio (R3/R1) of 8.0% or less. By setting the ratio (R3/R1) at 8.0% or less, the tread surface is formed to have a properly rounded shape. The load on the shoulders and sidewalls of the tire is alleviated. Damage to the shoulders and sidewalls of the tire is effectively prevented. From those viewpoints, the ratio (R3/R1) is more preferred to be 7.0% or less.

The ratio (R3/R1) is preferred to be 2.5% or greater. By setting the ratio (R3/R1) at 2.5% or greater, a sufficient contact-patch width is secured. A rounded tread surface of the tire does not result in an overly narrow contact-patch width. Such a structure contributes to excellent wear resistance in the tire. Moreover, the tire exhibits sufficient grip performance. From those viewpoints, the ratio (R3/R1) is more preferred to be 2.8% or greater.

Radius (R3) is preferred to be 45 mm or less. When radius (R3) is set at 45 mm or less, the tread surface is formed to have a properly rounded shape. The load on the shoulders and sidewalls of the tire is alleviated. Damage to the shoulders and sidewalls of the tire is effectively prevented. From those viewpoints, radius (R3) is more preferred to be 40 mm or less.

Radius (R3) is preferred to be 18 mm or greater. When radius (R3) is set at 18 mm or greater, a sufficient contact-patch width is secured. A rounded tread surface of the tire does not result in an overly narrow contact-patch width. Such a structure contributes to excellent wear resistance in the tire. In addition, the tire exhibits sufficient grip performance. From those viewpoints, radius (R3) is more preferred to be 20 mm or greater.

Double-headed arrow (W23) in Fig. 4 indicates the axial width between equatorial plane (CL) and the intersection of arcs (C2, C3). Width (W23) and width (W) are preferred to have a ratio (W23/W) of 98% or less. By setting the ratio (W23/W) at 98% or less, the tread surface is formed to have a properly rounded shape. The load on the shoulders and sidewalls of the tire is alleviated. Damage to the shoulders and sidewalls of the tire is effectively prevented. From those viewpoints, ratio (W23/W) is more preferred to be 92% or less.

The ratio (W23/W) is preferred to be 80% or greater. By setting the ratio (W23/W) at 80% or greater, a sufficient contact-patch width is secured. A rounded tread surface of the tire does not result in an overly narrow contact-patch width. Such a structure contributes to excellent wear resistance in the tire. In addition, the tire exhibits sufficient grip performance. From those viewpoints, the ratio (W23/W) is more preferred to be 82% or greater.

### [Examples]

The effects of the present invention are now made clear by referring to examples below. However, the scope of the present invention should not be limited to the descriptions of the examples.

### [Example 1]

The tire for Example 1 was prepared to have the structure shown in Fig. 1. The tire size is 235/45R17. The parameters of the tire are shown in Table 1. For width (Wt), values are shown when an inclination angle (θ) is 3 degrees and 5 degrees respectively. The number of arcs in the profile of the tire is four.

### [Comparative Example 1]

The tire for Comparative Example 1 was obtained by changing the profile of the tire in Example 1 so that the ratios (Wt/W) are set at the values shown in Table 1.

### [Example 2]

The tire for Example 2 was prepared to have the structure shown in Fig. 1. The tire size is 235/60R18. The parameters of the tire are shown in Table 1. The number of arcs in the profile of the tire is four.

### [Comparative Example 2]

The tire for Comparative Example 2 was obtained by changing the profile of the tire in Example 2 so that the ratios (Wt/W) are set at the values shown in Table 1.

### [Example 3]

The tire for Example 3 was prepared to have the structure shown in Fig. 1. The tire size is 215/60R16. The parameters of the tire are shown in Table 1. The number of arcs in the profile of the tire is three.

### [Example 4]

The tire for Example 4 was obtained by changing the profile of the tire in Example 3 so that the ratios (Wt/W) are set at the values shown in Table 1.

### [Example 5]

The tire for Example 5 was prepared to have the structure shown in Fig. 1. The tire size is 205/55R16. The parameters of the tire are shown in Table 2. The number of arcs in the profile of the tire is four.

### [Comparative Example 3]

The tire for Comparative Example 3 was obtained by changing the profile of the tire in Example 5 so that the ratios (Wt/W) are set at the values shown in Table 2.

### [Example 6]

The tire for Example 6 was prepared to have the structure shown in Fig. 4. The tire size is 205/55R16. The parameters of the tire are shown in Table 2. The number of arcs in the profile of the tire is three.

### [Comparative Example 4]

The tire for Comparative Example 4 was obtained by changing the profile of the tire in Example 6 so that the ratios (Wt/W) are set at the values shown in Table 2.

### [Example 7]

The tire for Example 7 was obtained by setting the number of arcs in the profile at two. The structure of the tire is the same as Example 1 except for the tread. The tire size is 205/55R16. The parameters of the tire are shown in Table 2.

### [Comparative Example 5]

The tire for Comparative Example 5 was obtained by changing the profile of the tire in Example 7 so that the ratios (Wt/W) are set at the values shown in Table 2.

### [Examples 8 to 12 and Comparative Example 6]

Tires were obtained for Examples 8 to 12 and Comparative Example 6 by each being prepared the same as in Example 1 except that ratios (R2/R1), (R3/R1) and (R4/R1) were changed and parameters of the profile were set as shown in Table 3. Table 3 shows Example 1 again.

### [High-Speed Durability]

Each tire was mounted on a normal rim and filled with air at a normal inflation pressure. The tire was installed on a drum-type test running machine, and a normal load was exerted on the tire. The camber angle was set at 3 degrees. The tire was set to run on a drum with a diameter of 1.7 m. The initial speed was 160 km/h, and the speed was increased by 10 km/h every 10 minutes. When damage to the tire was observed, the speed and the running time at that speed were recorded. The results are shown in Tables 1 to 3 below. For example, "310-9" shown in a table indicates that damage occurred in a tire when the tire ran for 9 minutes at a speed of 310 km/h. The faster the speed is, the more preferred is the tire. When the speeds were the same, the longer the running time, the more outstanding was the tire.

### [Wear Resistance Evaluation]

Tires in Example 1, Examples 8 to 12 and Comparative Example 6 were mounted on normal rims (size=8JJ) on the rear wheels of a rear-wheel-drive vehicle. The tires were filled with air at an inflation pressure of 230 kPa. The camber angle was set at 3 degrees. The vehicle was run on a test course to reach a total running distance of 150 km. The wear in the tire shoulders was measured. The obtained values were each inverted and shown in Table 3 as indices based on the value of Example 1 being set as 100. The greater the index is, the longer is the tire lifespan against wear. Also, the greater the value is, the more preferred is the tire.

**Table 1: Evaluation Results**

| | Example 1 | Comparative Example 1 | Example 2 | Comparative Example 2 | Example 3 | Example 4 |
|---|---|---|---|---|---|---|
| Size | 235/45R17 | | 235/60R18 | | 215/60R16 | |
| LI/Speed Rating | 94Y | | 103W | | 95V | |
| Number of Arcs | 4 | | 4 | | 4 | |
| Width Wt (θ=3°) [mm] | 42 | 69 | 45 | 69 | 45 | 63 |
| Width Wt (θ=5°) [mm] | 63 | 80 | 65 | 79 | 62 | 75 |
| Width W [mm] | 103 | 103 | 100 | 105.5 | 96 | 98 |
| Ratio (Wt/W) (θ=3°) [%] | 41 | 67 | 45 | 65 | 47 | 64 |
| Ratio (Wt/W) (θ=5°) [%] | 61 | 78 | 65 | 75 | 65 | 77 |
| High-speed Durability (km/h-min) | 310-9 | 280-5 | 280-2 | 250-10 | 290-2 | 260-5 |

**Table 2: Evaluation Results**

| | Example 5 | Comparative Example 3 | Example 6 | Comparative Example 4 | Example 7 | Comparative Example 5 |
|---|---|---|---|---|---|---|
| Size | 205/55R16 | | 205/55R16 | | 205/55R16 | |
| LI/Speed Rating | 91V | | 91V | | 91V | |
| Number of Arcs | 4 | | 3 | | 2 | |
| Width Wt (θ=3°) [mm] | 45 | 65 | 58 | 70 | 60 | 73 |
| Width Wt (θ=5°) [mm] | 58 | 73 | 73 | 83 | 74 | 86 |
| Width W [mm] | 90 | 90 | 92 | 92 | 94 | 94 |
| Ratio (Wt/W) (θ=3°) [%] | 50 | 72 | 63 | 76 | 64 | 78 |
| Ratio (Wt/W) (θ=5°) [%] | 64 | 81 | 79 | 90 | 79 | 92 |
| High-speed Durability (km/h-min) | 290-2 | 250-5 | 280-5 | 250-3 | 270-4 | 240-9 |

**Table 3: Evaluation Results**

| | Example 1 | Example 8 | Example 9 | Example 10 | Comparative Example 6 | Example 11 | Example 12 |
|---|---|---|---|---|---|---|---|
| Size | 235/45R17 | | | | | | |
| LI/Speed Rating | 94Y | | | | | | |
| Number of Arcs | 4 | | | | | | |
| Radius R1 [mm] | 900 | | | | | | |
| Ratio (R2/R1) [%] | 44 | 30 | 35 | 65 | 70 | 44 | 44 |
| Ratio (R3/R1) [%] | 22 | 22 | 22 | 22 | 22 | 33 | 22 |
| Ratio (R4/R1) [%] | 4.4 | 4.4 | 4.4 | 4.4 | 4.4 | 4.4 | 2.2 |
| Width Wt (θ=3°) [mm] | 42 | 32 | 36 | 58 | 69 | 42 | 42 |
| Width Wt (θ=5°) [mm] | 63 | 55 | 59 | 80 | 90 | 70 | 70 |
| Width W [mm] | 103 | 103 | 103 | 103 | 103 | 103 | 103 |
| Ratio (Wt/W) (θ=3°) [%] | 41 | 31 | 35 | 56 | 67 | 41 | 41 |
| Ratio (Wt/W) (θ=5°) [%] | 61 | 53 | 57 | 78 | 87 | 68 | 68 |
| Ratio (W12/W) [%] | 31 | 31 | 31 | 31 | 31 | 31 | 31 |
| Ratio (W23/W) [%] | 56 | 56 | 56 | 56 | 62 | 56 | 56 |
| Ratio (W34/W) [%] | 93 | 93 | 93 | 93 | 97 | 97 | 93 |
| High-speed Durability (km/h-min) | 310-9 | 320-5 | 300-5 | 300-3 | 290-5 | 300-5 | 300-1 |
| Wear Resistance | 100 | 75 | 97 | 93 | 70 | 95 | 100 |

As shown in Tables 1 to 3, evaluations on tires of the Examples are higher than those of the Comparative Examples. The evaluation results confirm the excellence of the tires related to the present invention.

### [INDUSTRIAL APPLICABILITY]

The tires related to the present invention can be mounted on various vehicles.
To provide a tire that exhibits both excellent high-speed durability and wear resistance, in Tire 3, profile 35 of the tread surface ranging from equatorial plane (CL) to tread edge 28 is formed with multiple arcs protruding in a radially outward direction. Among those arcs, when the i-th arc counted from the equatorial plane (CL) in an axially outward direction is set as arc (Ci), and when the radius of arc (Ci) is set as (Ri), then arc C(i+1) and arc (Ci) make contact at the point where they intersect. Radius (Ri+1) is not greater than radius (Ri). When a virtual line inclining at an angle (θ) relative to the axial direction is set as (Lt), when the point where virtual line (Lt) makes contact with profile 35 of the tread surface is set as (Pt), and when the axial width from the equatorial plane (CL) to contact point (Pt) is set as (Wt), then width (Wt) at an inclination angle (θ) of 3 degrees and width (W) ranging from the equatorial plane (CL) to tread edge 28 are set to have a ratio Wt/W of less than 65%.

### [DESCRIPTIONS OF NUMERICAL REFERENCES]

- 1,3 ...: tire
- 2, 47 ...: contact-patch pattern
- 4 ...: tread
- 6 ...: sidewall
- 8 ...: clinch
- 10 ...: bead
- 12 ...: carcass
- 12a ...: first ply (12a)
- 12b ...: second ply (12b)
- 14 ...: belt
- 14a ...: first layer (14a)
- 14b ...: second layer (14b)
- 16 ...: band
- 18 ...: edge band
- 20 ...: inner liner
- 22 ...: chafer
- 24, 52 ...: main groove
- 26 ...: rib
- 28, 54 ...: tread edge
- 30 ...: base layer
- 32 ...: cap layer
- 34 ...: tread surface
- 35, 50 ...: profile
- 36 ...: core
- 38 ...: apex
- 28 ...: edge band
- 40, 44 ...: main portion
- 42, 46 ...: turn-up portion

## Claims

1. A pneumatic tire, comprising:
a tread with an outer surface to form the tread surface; and
a belt positioned on the radially inner side of the tread,
wherein in a cross section perpendicular to a circumferential direction, a profile of the tread surface ranging from the equatorial plane to the tread edge is formed with a plurality of arcs protruding in a radially outward direction,
when the i-th arc counted from the equatorial plane in an axially outward direction is set as arc (Ci), and when the radius of arc (Ci) is set as (Ri),
the tangent line of arc (C1) on the equatorial plane extends in an exact axial direction,
arc C(i+1) and arc (Ci) make contact at the point where they intersect, and
radius R(i+1) is not greater than radius (Ri),
in the cross section perpendicular to a circumferential direction, when a virtual line inclining at an angle (θ) relative to the axial direction is set as (Lt), when the point where virtual line (Lt) makes contact with the profile of the tread surface is set as (Pt), and when the axial width from the equatorial plane to contact point (Pt) is set as (Wt),
then width (Wt) at an inclination angle (θ) between 3 and 5 degrees and width (W) ranging from the equatorial plane to the tread edge are set to have a ratio (Wt/W) of less than 65%,
wherein
when the number of arcs is four, the ratio of radius (R2) to radius (R1) is 35% or greater but 65% or less, and when the axial width from the equatorial plane to the intersection of arcs (C1, C2) is set as (W12), then the ratio of width (W12) to width (W) is 26% or greater but 38% or less.

2. The pneumatic tire according to Claim 1, wherein when the ratio of radius (R3) to radius (R1) is set at 10% or greater but 25% or less and the ratio of radius (R4) to radius (R1) is set at 2.8% or greater but 8.0% or less, and when the axial width from the equatorial plane to the intersection of arcs (C2, C3) is set as (W23) and the axial width from the equatorial plane to the intersection of arcs (C3, C4) is set as (W34), then the ratio of width (W23) to width (W) is 50% or greater but 62% or less, and the ratio of width (W34) to width (W) is 80% or greater but 98% or less.

3. A pneumatic tire, comprising:
a tread with an outer surface to form the tread surface; and
a belt positioned on the radially inner side of the tread,
wherein in a cross section perpendicular to a circumferential direction, a profile of the tread surface ranging from the equatorial plane to the tread edge is formed with a plurality of arcs protruding in a radially outward direction,
when the i-th arc counted from the equatorial plane in an axially outward direction is set as arc (Ci), and when the radius of arc (Ci) is set as (Ri),
the tangent line of arc (C1) on the equatorial plane extends in an exact axial direction,
arc C(i+1) and arc (Ci) make contact at the point where they intersect, and
radius R(i+1) is not greater than radius (Ri),
in the cross section perpendicular to a circumferential direction, when a virtual line inclining at an angle (θ) relative to the axial direction is set as (Lt), when the point where virtual line (Lt) makes contact with the profile of the tread surface is set as (Pt), and when the axial width from the equatorial plane to contact point (Pt) is set as (Wt),
then width (Wt) at an inclination angle (θ) between 3 and 5 degrees and width (W) ranging from the equatorial plane to the tread edge are set to have a ratio (Wt/W) of less than 65%,
wherein
when the number of arcs is three, when the ratio of radius (R2) to radius (R1) is 28% or greater but 43% or less, and when the axial width from the equatorial plane to the intersection of arcs (C1, C2) is set as (W12), then the ratio of width (W12) to width (W) is 28% or greater but 44% or less.

4. The pneumatic tire according to Claim 3, wherein when the ratio of radius (R3) to radius (R1) is set at 2.5% or greater but 8.0% or less, and when the axial width from the equatorial plane to the intersection of arcs (C2, C3) is set as (W23), then the ratio of width (W23) to width (W) is 80% or greater but 98% or less.

5. The pneumatic tire according to any of Claims 1 to 4, wherein when the axial width from the equatorial plane to the outer edge of the belt is set as (Wb), the ratio of width (Wb) to width (W) is 90% or greater but 98% or less.

6. The pneumatic tire according to any of Claims 1 to 5, wherein, when the inclination angle (θ) is 3 degrees, width (Wt) and width (W) have a ratio (Wt/W) of 60% or less and 30% or more.

7. The pneumatic tire according to any of Claims 3 or 4, wherein radius (R1) is between 300 and 800 mm.

8. The pneumatic tire according to Claim 7, wherein Radius (R2) is between 90 and 200 mm, and preferably radius (R3) is between 18 and 45 mm.

9. The pneumatic tire according to any of Claims 1 or 2, wherein radius (R1) is between 500 and 1300 mm.

10. The pneumatic tire according to Claim 9, wherein Radius (R3) is between 90 and 200 mm, and preferably radius (R4) is between 25 and 45 mm.

## Patentansprüche

1. Luftreifen, der Folgendes aufweist:
eine Lauffläche mit einer Außenfläche, um eine Laufflächenoberfläche auszubilden; und
einen Gürtel, der auf der radial inneren Seite der Lauffläche positioniert ist,
wobei in einem Querschnitt senkrecht zu einer Umfangsrichtung ein Profil der Laufflächenoberfläche, das von der Äquatorebene zu dem Laufflächenrand reicht, mit einer Vielzahl von Bögen ausgebildet ist, die in einer radial auswärts gerichteten Richtung vorragen,
wenn der i-te Bogen, der von der Äquatorebene aus in einer axial auswärts gerichteten Richtung gezählt wird, als ein Bogen (Ci) eingestellt ist und wenn der Radius des Bogens (Ci) als (Ri) eingestellt ist,
die Tangentenlinie eines Bogens (C1) an der Äquatorebene sich in einer exakten axialen Richtung erstreckt,
ein Bogen C(i+1) und ein Bogen (Ci) einen Kontakt an dem Punkt herstellen, an dem sie sich schneiden, und
ein Radius R(i+1) nicht größer als ein Radius (Ri) ist,
in dem Querschnitt senkrecht zu der Umfangsrichtung, wenn eine virtuelle Linie, die sich in einem Winkel (θ) relativ zu der axialen Richtung neigt, als (Lt) eingestellt ist, wenn der Punkt, an dem eine virtuelle Linie (Lt) einen Kontakt mit dem Profil der Laufflächenoberfläche herstellt, als (Pt) eingestellt ist, und wenn die axiale Breite von der Äquatorebene zu einem Kontaktpunkt (Pt) als (Wt) eingestellt ist,
dann eine Breite (Wt) bei dem Neigungswinkel (θ) zwischen 3° und 5° und eine Breite (W), die von der Äquatorebene zu dem Laufflächenrand reicht, eingestellt sind, um ein Verhältnis (Wt/W) von weniger als 65% zu haben,
wobei
wenn die Anzahl von Bögen Vier ist, das Verhältnis von Radius (R2) zu Radius (R1) 35% oder größer, aber 65% oder weniger ist, und wenn die axiale Breite von der Äquatorebene zu dem Schnittpunkt von Bögen (C1, C2) als (W12) eingestellt ist, dann das Verhältnis von Breite (W12) zu Breite (W) 26% oder größer, aber 38% oder weniger ist.

2. Luftreifen nach Anspruch 1, wobei dann, wenn das Verhältnis von Radius (R3) zu Radius (R1) bei 10% oder größer, aber 25% oder weniger eingestellt ist und das Verhältnis von Radius (R4) zu Radius (R1) bei 2,8% oder größer, aber 8% oder weniger eingestellt ist, und wenn die axiale Breite von der Äquatorebene zu dem Schnittpunkt von Bögen (C2, C3) als (W23) eingestellt ist und die axiale Breite von der Äquatorebene zu dem Schnittpunkt von Bögen (C3, C4) als (W34) eingestellt ist, dann ist das Verhältnis von Breite (W23) zu Breite (W) 50% oder größer, aber 62% oder weniger und ist das Verhältnis von Breite (W34) zu Breite (W) 80% oder größer, aber 98% oder weniger.

3. Luftreifen, der Folgendes aufweist:
eine Lauffläche mit einer Außenfläche, um die Laufflächenoberfläche auszubilden; und
einen Gürtel, der auf der radial inneren Seite der Lauffläche positioniert ist,
wobei in einem Querschnitt senkrecht zu einer Umfangsrichtung ein Profil der Laufflächenoberfläche, das von der Äquatorebene zu dem Laufflächenrand reicht, mit einer Vielzahl von Bögen ausgebildet ist, die in einer radial auswärts gerichteten Richtung vorragen,
wenn der i-te Bogen, der von der Äquatorebene in einer axial auswärts gerichteten Richtung gezählt wird, als Bogen (Ci) eingestellt ist und wenn der Radius von Bogen (Ci) als (Ri) eingestellt ist,
die Tangentenlinie von Bogen (C1) an der Äquatorebene sich in einer exakten axialen Richtung erstreckt,
Bogen C(i+1) und Bogen (Ci) einen Kontakt an dem Punkt herstellen, an dem sie sich schneiden, und
Radius R(i+1) nicht größer als Radius (Ri) ist,
in dem Querschnitt senkrecht zu einer Umfangsrichtung, wenn eine virtuelle Linie, die sich in einem Winkel (θ) relativ zu der axialen Richtung neigt, als (Lt) eingestellt ist, wenn der Punkt, an dem eine virtuelle Linie (Lt) einen Kontakt mit dem Profil der Laufflächenoberfläche herstellt, als (Pt) eingestellt ist und wenn die axiale Breite von der Äquatorebene zu Kontaktpunkt (Pt) als (Wt) eingestellt ist,
dann Breite (Wt) bei einem Neigungswinkel (θ) zwischen 3° und 5° und Breite (W), die von der Äquatorebene zu dem Laufflächenrand hin reicht, eingestellt sind, um ein Verhältnis (Wt/W) von weniger als 65% zu haben,
wobei
wenn die Zahl von Bögen Drei ist, wenn das Verhältnis von Radius (R2) zu Radius (R1) 28% oder größer, aber 43% oder weniger ist, und wenn die axiale Breite von der Äquatorebene zu dem Schnittpunkt von Bögen (C1, C2) als (W12) eingestellt ist, dann ist das Verhältnis von Breite (W12) zu Breite (W) 28% oder größer, aber 44% oder weniger.

4. Luftreifen nach Anspruch 3, wobei dann, wenn das Verhältnis von Radius (R3) zu Radius (R1) auf 2,5% oder größer, aber 8,0% oder weniger eingestellt ist und wenn die axiale Breite von der Äquatorebene zu dem Schnittpunkt von Bögen (C2, C3) als (W23) eingestellt ist, dann ist das Verhältnis von Breite (W23) zu Breite (W) 80% oder größer, aber 98% oder weniger.

5. Luftreifen nach einem von Ansprüchen 1 bis 4, wobei dann, wenn die axiale Breite von der Äquatorebene zu dem äußeren Rand des Gürtels als (Wb) eingestellt ist, das Verhältnis von Breite (Wb) zu Breite (W) 90% oder größer, aber 98% oder weniger ist.

6. Luftreifen nach einem von Ansprüchen 1 bis 5, wobei dann, wenn der Neigungswinkel (θ) 3° ist, Breite (Wt) und Breite (W) ein Verhältnis (Wt/W) von 60% oder weniger und 30% oder mehr haben.

7. Luftreifen nach einem von Ansprüchen 3 oder 4, wobei Radius (R1) zwischen 300 und 800 mm ist.

8. Luftreifen nach Anspruch 7, wobei Radius (R2) zwischen 90 und 200 mm ist und vorzugsweise Radius (R3) zwischen 18 und 45 mm ist.

9. Luftreifen nach einem von Ansprüchen 1 oder 2, wobei Radius (R1) zwischen 500 und 1300 mm ist.

10. Luftreifen nach Anspruch 9, wobei Radius (R3) zwischen 90 und 200 mm ist und vorzugsweise Radius (R4) zwischen 25 und 45 mm ist.

## Revendications

1. Pneumatique, comprenant :
une bande de roulement avec une surface externe pour former la surface de bande de roulement ; et
une ceinture positionnée sur le côté radialement interne de la bande de roulement,
dans lequel dans une section transversale perpendiculaire à une direction circonférentielle, un profil de la surface de bande de roulement allant du plan équatorial jusqu'au bord de bande de roulement est formé avec plusieurs arcs faisant saillie dans une direction radialement vers l'extérieur,
lorsque le i^{ième} arc compté à partir du plan équatorial dans une direction axialement vers l'extérieur est défini par arc (Ci), et lorsque le rayon d'arc (Ci) est défini par (Ri),
la ligne tangente d'arc (C1) sur le plan équatorial s'étend dans une direction exacte axiale,
l'arc C(i+1) et l'arc (Ci) réalisent un contact au point où ils se croisent, et
le rayon R(i+1) n'est pas supérieur au rayon (Ri),
dans la section transversale perpendiculaire à une direction circonférentielle, lorsqu'une ligne virtuelle s'inclinant à un angle (θ) par rapport à la direction axiale est définie par (Lt), lorsque le point où la ligne virtuelle (Lt) réalise un contact avec le profil de la surface de bande de roulement est défini par (Pt), et lorsque la largeur axiale à partir du plan équatorial jusqu'au point de contact (Pt) est définie par (Wt),
alors la largeur (Wt) à un angle d'inclinaison (θ) entre 3 et 5 degrés et la largeur (W) allant du plan équatorial jusqu'au bord de bande de roulement sont définies pour présenter un rapport (Wt/W) inférieur à 65 %,
dans lequel
lorsque le nombre d'arcs est égal à quatre, le rapport de rayon (R2) au rayon (R1) est de 35 % ou supérieur mais de 65 % ou inférieur, et lorsque la largeur axiale à partir du plan équatorial jusqu'à l'intersection d'arcs (C1, C2) est définie par (W12), le rapport de largeur (W12) à largeur (W) est alors de 26 % ou supérieur mais de 38 % ou inférieur.

2. Pneumatique selon la revendication 1, dans lequel lorsque le rapport de rayon (R3) au rayon (R1) est fixé à 10 % ou supérieur mais à 25 % ou inférieur et le rapport de rayon (R4) au rayon (R1) est fixé à 2,8 % ou supérieur mais 8,0 % ou inférieur, et lorsque la largeur axiale à partir du plan équatorial jusqu'à l'intersection des arcs (C2, C3) est définie par (W23) et la largeur axiale à partir du plan équatorial jusqu'à l'intersection d'arcs (C3, C4) est définie par (W34), le rapport de largeur (W23) à largeur (W) est alors de 50 % ou supérieur mais de 62 % ou inférieur, et le rapport de largeur (W34) à largeur (W) est de 80 % ou supérieur mais de 98 % ou inférieur.

3. Pneumatique, comprenant :
une bande de roulement avec une surface externe pour former la surface de bande de roulement ; et
une ceinture positionnée sur le côté radialement interne de la bande de roulement,
dans lequel dans une section transversale perpendiculaire à une direction circonférentielle, un profil de la surface de bande de roulement allant du plan équatorial jusqu'au bord de bande de roulement est formé avec plusieurs arcs faisant saillie dans une direction radialement vers l'extérieur,
lorsque le i^{ième} arc compté à partir du plan équatorial dans une direction axialement vers l'extérieur est défini par l'arc (Ci), et lorsque le rayon d'arc (Ci) est défini par (Ri),
la ligne tangente d'arc (C1) sur le plan équatorial s'étend dans une direction axiale exacte,
l'arc C(i+1) et l'arc (Ci) réalisent un contact au point où ils se croisent, et
le rayon R(i+1) n'est pas supérieur au rayon (Ri),
dans la section transversale perpendiculaire à une direction circonférentielle, lorsqu'une ligne virtuelle s'inclinant à un angle (θ) par rapport à la direction axiale est définie par (Lt), lorsque le point où la ligne virtuelle (Lt) réalise un contact avec le profil de la surface de bande de roulement est défini par (Pt), et lorsque la largeur axiale à partir du plan équatorial jusqu'au point de contact (Pt) est définie par (Wt),
la largeur (Wt) à un angle d'inclinaison (θ) entre 3 et 5 degrés et la largeur (W) allant du plan équatorial jusqu'au bord de bande de roulement sont alors définies pour présenter un rapport (Wt/W) inférieur à 65 %,
dans lequel
lorsque le nombre d'arcs est égal à trois, lorsque le rapport de rayon (R2) au rayon (R1) est de 28 % ou supérieur mais de 43 % ou inférieur, et lorsque la largeur axiale à partir du plan équatorial jusqu'à l'intersection d'arcs (C1, C2) est définie par (W12), le rapport de largeur (W12) à largeur (W) est alors de 28 % ou supérieur mais de 44 % ou inférieur.

4. Pneumatique selon la revendication 3, dans lequel lorsque le rapport de rayon (R3) à rayon (R1) est fixé à 2,5 % ou supérieur mais 8,0 % ou inférieur, et lorsque la largeur axiale à partir du plan équatorial jusqu'à l'intersection d'arcs (C2, C3) est définie par (W23), alors le rapport de largeur (W23) à largeur (W) est de 80 % ou supérieur mais de 98 % ou inférieur.

5. Pneumatique selon l'une quelconque des revendications 1 à 4, dans lequel lorsque la largeur axiale à partir du plan équatorial jusqu'au bord externe de la ceinture est définie par (Wb), le rapport de largeur (Wb) à largeur (W) est de 90 % ou supérieur mais de 98 % ou inférieur.

6. Pneumatique selon l'une quelconque des revendications 1 à 5, dans lequel, lorsque l'angle d'inclinaison (θ) est de 3 degrés, la largeur (Wt) et la largeur (W) présentent un rapport (Wt/W) de 60 % ou inférieur et de 30 % ou supérieur.

7. Pneumatique selon l'une quelconque des revendications 3 ou 4, dans lequel le rayon (R1) est de 300 à 800 mm.

8. Pneumatique selon la revendication 7, dans lequel le rayon (R2) est de 90 à 200 mm, et le rayon (R3) est de préférence de 18 à 45 mm.

9. Pneumatique selon l'une quelconque des revendications 1 ou 2, dans lequel le rayon (R1) est de 500 à 1 300 mm.

10. Pneumatique selon la revendication 9, dans lequel le rayon (R3) est de 90 à 200 mm, et le rayon (R4) est de préférence de 25 à 45 mm.
